(19) Europäisches Patentamt
European Patent Office
Office européen des brevets

(11) **EP 4 640 417 A1**

(12) **EUROPEAN PATENT APPLICATION**

(43) Date of publication:
**29.10.2025 Bulletin 2025/44**

(21) Application number: **24305654.6**

(22) Date of filing: **26.04.2024**

(51) International Patent Classification (IPC):
**B29D 11/00** $^{(2006.01)}$

(52) Cooperative Patent Classification (CPC):
**B29D 11/00009; B29C 45/14; B29C 45/14778; B29D 11/00317; B29D 11/0048; B29D 11/0073;** B29C 2045/4063; B29L 2011/0016

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Essilor International**
**94220 Charenton-Le-Pont (FR)**

(72) Inventor: **CHIU, Hao-Wen**
**34685, FLORIDA (US)**

(74) Representative: **Plasseraud IP**
**104 Rue de Richelieu**
**CS92104**
**75080 Paris Cedex 02 (FR)**

Remarks:
Amended claims in accordance with Rule 137(2) EPC.

(54) **METHOD FOR MANUFACTURING AN OPTICAL ARTICLE WITH ENCAPSULATED MICROSTRUCTURES**

(57) Method for manufacturing an optical article with encapsulated microstructures (64) comprising the steps of:
- providing a support layer (56) having microstructures (58) on a front convex surface, the support layer (56) comprising a first optical thermoplastic material (52);
- depositing, on said micro-structured surface, a second optical thermoplastic material (60) having a refractive index ($RI_{Wafer}$) and a glass transition temperature ($Tg_{Wafer}$) lower than a respective refractive index ($RI_{Lens}$) and glass transition temperature ($Tg_{Lens}$) of the first optical thermoplastic material (52), thus obtaining a covering layer (62) which encapsulates the microstructures (58), the support layer (56) being thicker than the covering layer and forming, together with said covering layer (62), said optical article with encapsulated microstructures (64).

**FIG. 4**

## Description

## Technical field

This invention relates to a method for manufacturing an optical article with encapsulated microstructures, such as an ophthalmic lens, in particular for myopia control.

## Background information and prior art

Ophthalmic lenses with microstructures, commonly microlenses, placed on a front surface to provide peripheral defocus of light impinging the retina of an eye of an individual have been shown to effectively slow down the progression of myopia in kids and teens. However, the presence of microstructures on the lens surface presents a significant challenge in the overall manufacturing of the lens.

In the following of the description reference will be made to a "lens", however, other known optical articles having encapsulated microstructures on a surface such as wafers or films can be considered.

Injection molding methods for manufacturing lenses with microstructures are known. The injection molding methods typically comprise the injection of a first optical thermoplastic material into a mold to obtain an optical thermoplastic wafer layer $TP_{Wafer}$ (also referred as cover layer) of uniform thickness and having microstructures on a surface.

The wafer layer $TP_{Wafer}$ with microstructures can be produced by injection molding, roll-to-roll hot embossing or other means.

An encapsulation of the microstructures is then carried out by injecting, over the micro-structured surface of the wafer layer $TP_{Wafer}$, a different second optical thermoplastic material, to obtain a lens layer $TP_{Lens}$ (also referred as body layer) forming the main body of the lens.

The resulting final lens is a two-layered composite lens having microstructures encapsulated at the interface between the wafer layer $TP_{Wafer}$ and the lens layer $TP_{Lens}$.

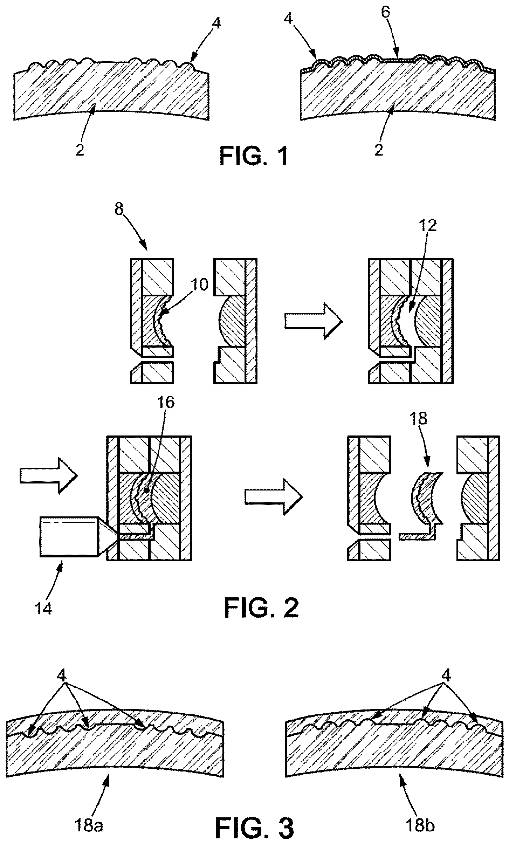

As shown in Figure 1, which depicts a section view of a lens 2 with microstructures 4, the geometric shape of the lens 2 is altered when a hard coating 6 is deposited on it to protect the lens 2 from scratches and other damages. The shape changes lead to a shift of the optical design of the lens 2. Several further design steps taking into consideration the coating process are typically needed to compensate such problem, and this is a time consuming and costly process. Moreover, the design compensation steps must be repeated for each different coating applied onto the lens 2.

Methods including lamination, overcasting, and injection overmolding are known to encapsulate the microstructures 4 inside the body of a lens to eliminate coating dependence while providing protection to the microstructures 4.

Figure 2 shows the steps of an injection overmolding process to encapsulate the microstructures 4 on the surface of the wafer layer $TP_{Wafer}$ above disclosed.

In Figure 2 it is shown a top view of an open mold 8 wherein the wafer layer $TP_{Wafer}$, referenced 10 in Figure 2, such as a PC (polycarbonate) wafer, having the microstructures 4 on its concave surface, is inserted. Then, the mold 8 is closed leaving an open space 12 between the wafer layer $TP_{Wafer}$ 10 and the mold 8. A hot melt of the second optical thermoplastic material, such as PMMA (polymethyl methacrylate), is injected into the open space 12 through a filler 14, thus creating the lens layer $TP_{Lens}$, referenced 16 in Figure 2. Finally, the mold 8 is opened, thus allowing obtaining a final lens 18 (a bilayer made up of the wafer layer $TP_{Wafer}$ 10 and the lens layer $TP_{Lens}$ 16).

As above detailed, the injection overmolding process involves injecting a hot melt second optical thermoplastic material over the relatively cold microstructured surface of the wafer layer TPwafer.

The microstructures 4 of the wafer layer $TP_{Wafer}$ soften and deform under the high heat and pressure of the overmolding steps. This results in a loss of shape integrity of the microstructures 4 and in a worsening of the optical design of such microstructures 4, thus leading to a poor control of the progression of myopia.

Moreover, the first optical thermoplastic material and the second optical thermoplastic material need to be carefully selected in order to form a well-defined clear interface for good optical fidelity and lens clarity, and in order to achieve a strong bonding. The resulting final lens 18 should in fact pass subsequent known Rx processing steps without issues, therefore, the choice of the materials is particularly challenging. Very specific property relations between the two different thermoplastic materials are necessary.

Figure 3 shows a section view of two different types of final lens 18, a first final lens 18a having convex microstructures 4 and a second final lens 18b having concave microstructure 4. The encapsulated microstructures 4 must have predetermined optical powers to facilitate the peripheral defocus. To have the appropriate optical powers, it is required that a wafer layer refractive index $RI_{Wafer}$ of the wafer layer $TP_{Wafer}$ is different from a lens layer refractive index $RI_{Lens}$ of the lens layer $TP_{Lens}$, i.e., the difference $\Delta RI$ of the two refractive index $RI_{Wafer}$ and $RI_{Lens}$ must be different from zero.

For myopia control, the microlens powers of the final lens 18 have to be positive to provide peripheral defocus that slows down the progression of the myopia. When $\Delta RI$ is greater than zero (i.e., $RI_{Wafer}$ is greater than $RI_{Lens}$), the microstructures 4 on the wafer layer $TP_{Wafer}$ have to be convex to have positive powers (first final lens 18a). When $\Delta RI$ is lower than 0 (i.e., $RI_{Wafer}$ is lower than $RI_{Lens}$), the microstructures 4 on the wafer layer $TP_{Wafer}$ have to be concave to have positive powers (second final lens 18b).

To maintain the shape integrity of the microstructures 4, the thermal resistance of the wafer layer $TP_{Wafer}$ must be greater than the thermal resistance of the lens layer $TP_{Lens}$, to withstand the high heat and pressure of the injection overmolding process. For a thermoplastic material, its thermal resistance can be characterized by the glass transition temperature Tg: a higher glass transition temperature $Tg$ corresponds to a greater heat resistance. Hence, the glass transition temperature $Tg_{Wafer}$ of the wafer layer $TP_{Wafer}$ has to be higher than the glass transition temperature $Tg_{Lens}$ of the lens layer $TP_{Lens}$ in order to prevent the microstructures 4 from deforming.

In general, a high index amorphous thermoplastic material has a great heat resistance owing inherently to the chemical structures. Therefore, a high glass transition temperature $Tg$ corresponds to a high refractive index RI.

As the main body of the final lens 18 is formed by the lens layer $TP_{Lens}$, to reduce the overall thickness of the final lens 18 to be aesthetically pleasant and appealing to consumers, it would be preferable that the second optical thermoplastic material of the lens layer $TP_{Lens}$ is a high index material having the lens layer refractive index $RI_{Lens}$ higher than the wafer layer refractive index $RI_{Wafer}$ of the wafer layer $TP_{Wafer}$. In such case the first optical thermoplastic material of the wafer layer $TP_{Wafe}$ would be a low index material.

This would however imply, as above explained, that the second optical thermoplastic material of the lens layer $TP_{Lens}$ has also a glass transition temperature $Tg_{Lens}$ higher than the one of the first optical thermoplastic material of the wafer layer $TP_{Wafer}$.

On the other side, to preserve the shape integrity of the microstructures 4 of the wafer layer $TP_{Wafer}$ during the subsequent injection overmolding of the second optical thermoplastic material, the heat resistance of the first optical thermoplastic material of the wafer layer $TP_{Wafer}$ must be greater than the one of the second optical thermoplastic material being injected to encapsulate the microstructures 4.

Therefore, using a high index material as second optical thermoplastic material for the lens layer $TP_{Lens}$ (which would be preferable to reduce the overall thickness of the final lens 18) would not work as the microstructures 4 created on the low index material of the wafer layer $TP_{Wafer}$ would severely deform.

None of the prior art technologies provides a working solution to construct a composite lens with encapsulated microstructures wherein the lens layer $TP_{Lens}$ is made up of a second optical thermoplastic material having a lens layer refractive index $RI_{Lens}$ higher than the wafer layer refractive index $RI_{Wafer}$ of the wafer layer $TP_{Wafer}$ and wherein, at the same time, the microstructures 4 do not deform.

In fact, it is not available a thermoplastic material pair wherein the first optical thermoplastic material of the wafer layer $TP_{Wafer}$ has a glass transition temperature $Tg_{Wafer}$ higher than the one of the second optical thermoplastic material of the lens layer $TP_{Lens}$ and, at the same time, a refractive index $RI_{Wafer}$ lower than the one $RI_{Lens}$ of the second optical thermoplastic material, such materials being further compatible each other to construct a two-layered composite lens.

Accordingly, there is the need to provide an innovative method for manufacturing an optical article with encapsulated microstructures with a reduced overall thickness to be aesthetically pleasant and appealing to consumers and which, at the same time, maintains the shape integrity and the optical design of the microstructures it contains to better control the progression of myopia in an individual, thus overcoming the problems of the prior art.

## Summary

What is provided herein is a method for manufacturing an optical article with encapsulated microstructures comprising the steps of:

- providing a support layer having microstructures on a front convex surface, the support layer comprising a first optical thermoplastic material;
- depositing, on said micro-structured surface, a second optical thermoplastic material having a refractive index and a glass transition temperature lower than a respective refractive index and glass transition temperature of the first optical thermoplastic material, thus obtaining a covering layer which encapsulates the microstructures, the support layer being thicker than the covering layer and forming, together with said covering layer, said optical article with encapsulated microstructures.

In an embodiment, depositing a second optical thermoplastic material comprises performing an injection overmolding.

In an embodiment, the support layer is preheated before depositing the second optical thermoplastic material.

In an embodiment, the support layer is preheated to a uniform temperature that satisfies the following relation:

$$0°C < \Delta T = Tg_{Lens} - T_{Lens} \leq 100°C$$

where $T_{Lens}$ is the temperature of the support layer and $Tg_{Lens}$ is the glass transition temperature of the first optical thermoplastic material.

In an embodiment, the method further comprises placing the support layer into a mold before depositing the second optical thermoplastic material and then pushing the optical article with encapsulated microstructures out of the mold in a pushing direction by using at the same time an ejector pin and a body of the mold itself as ejector.

In an embodiment, the first optical material is polycarbonate, aromatic thermoplastic polyurethane, aromatic polyamide, polysulfone, polyphenylsulfone, polyetherimide, a copolymer thereof, or a derivative or mixture thereof.

In an embodiment, the second optical material is polymethyl methacrylate, methyl methacrylate copolymer, aliphatic thermoplastic polyurethane, aliphatic polyamide, isosorbide copolycarbonate, polyester, a copolymer thereof, or a derivative or mixture thereof.

In an embodiment, the thickness of the support layer is comprised between 0.25mm to 15mm and above.

In an embodiment, the thickness of the covering layer is comprised between 0.25mm and 2mm, and preferably between 0.40mm and 1.50mm.

In an embodiment, the thickness of the optical article with encapsulated microstructures is comprised between 0.50mm to 15mm and above.

Also provided herein is an optical article with encapsulated microstructures comprising a finished lens, a semi-finished lens, a wafer or a film.

The aforesaid optical article with encapsulated microstructures can be designed to control myopia of an individual.

## Description of the drawings

Further characteristics and advantages of the present invention will become apparent from the following description, provided merely by way of a non-limiting example, with reference to the attached drawings, in which:

Figure 1 depicts a section view of a lens with microstructures;

Figure 2 shows the steps of an injection overmolding process to encapsulate microstructures on a surface of a wafer layer;

Figure 3 shows a section view of two different types of final lens;

Figure 4 shows the step of a method for manufacturing an optical article with encapsulated microstructures according to an example of the present invention;

Figure 5 shows a top view of a mold and related optical article of the prior art;

Figure 6 shows a top view of the mold with the optical article with encapsulated microstructures according to an example of the present invention;

Figure 7 is a top view picture of the support layer according to an example of the invention;

Figure 8 shows the microlens average power according to an example of the invention;

Figure 9 is a bottom view picture of the support layer according to an example of the invention; and

Figure 10 shows an image of an optical article with encapsulated microstructures according to an example of the invention.

## Detailed description of embodiments

In the description which follows, the drawing figures are not necessarily to scale, and certain features may be shown in generalized or schematic form in the interest of clarity and conciseness or for informational purposes. Embodiments discussed herein are merely representative and do not limit the scope of the invention. It will also be obvious to one skilled in the art that all the technical features that are defined relative to a process can be transposed, individually or in combination, to a device and conversely, all the technical features relative to a device can be transposed, individually or in combination, to a process. To avoid unnecessary details for practicing the invention, the description may omit certain information already known to those skilled in the art.

The method for manufacturing an optical article with encapsulated microstructures according to the present invention is based on injecting a covering layer of a low index and low heat resistance optical thermoplastic material, such as polymethyl methacrylate (PMMA), on a thicker support layer comprising a high index and high heat resistance optical thermoplastic material, such as polycarbonate (PC), having microstructures on its convex surface.

The support layer can be a semi-finished (SF) lens or a finished lens. The microstructures on the convex surface can be unifocal or bifocal microlenses, pi-Fresnel microstructures, diffractive micro pillars, etc. placed in different arrangements such as concentric rings or a contiguous hexagonal array.

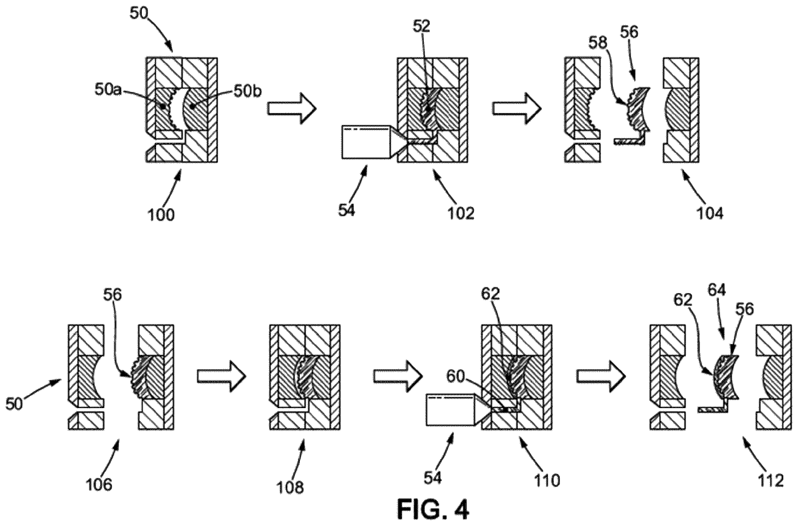

Figure 4 shows the step of a method for manufacturing an optical article with encapsulated microstructures according to an example of the present invention.

In a first step 100, a mold 50 is provided comprising a shaped portion 50a having a micro-structured surface and a smooth portion 50b having a smooth surface. In a next step 102 a high index and high heat resistance first optical thermoplastic material 52 is injected into the mold 50 through a filler 54.

In an embodiment, the first optical thermoplastic material 52 is polycarbonate (PC), aromatic thermoplastic polyurethane, aromatic polyamide, polysulfone, polyphenylsulfone, polyetherimide, a copolymer thereof, or a derivative or mixture thereof.

The aforementioned polycarbonate can be the most common bisphenol A (BPA) polycarbonate or polycarbonates derived from other bisphenols (e.g. bisphenol AP, bisphenol C, bisphenol TMC).

In a next step 104, the mold 50 is opened and a support layer 56 (corresponding to the lens layer $TP_{Lens}$ 16 above disclosed) having microstructures 58 on a front convex surface is obtained. The microstructures 58 are created in a manner per se known.

Considering a desired final thickness of the resulting optical article to obtain, preferably a lens, for myopia control, the thickness of the micro-structured support layer 56 is comprised between 0.25mm to 15mm and above.

Once the micro-structured support layer 56 is obtained, in a next step 106, the support layer 56 is re-inserted into the mold 50, which is then closed in step 108. In step 110 a second optical thermoplastic material 60 with a refractive index $RI_{Wafer}$ and a glass transition temperature $Tg_{Wafer}$ lower than a respective refractive index $RI_{Lens}$ and glass transition temperature $Tg_{Lens}$ of the first optical thermoplastic material 52 is deposited, preferably injection-overmolded through the filler 54, on the support layer 56 (on the convex micro-structured surface of the support layer 56) to encapsulate the microstructures 58, thus forming a covering layer 62 (corresponding to the wafer layer $TP_{Wafer}$ 10 above disclosed).

The support layer 56 is thicker than the covering layer 62.

In an embodiment, the second optical thermoplastic material 60 is polymethyl methacrylate (PMMA), methyl methacrylate copolymer, aliphatic thermoplastic polyurethane, aliphatic polyamide, isosorbide copolycarbonate (e.g. Durabio™ from Mitsubishi Chemical Performance Polymer), polyester, a copolymer thereof, or a derivative or mixture thereof.

The covering layer 62 encapsulates the microstructures 58 and forms, together with the support layer 56, an optical article with encapsulated microstructures 64, once the mold 50 is opened in next step 112.

The optical article with encapsulated microstructures 64 represents a two-layered lens with smooth front and back surfaces.

As the second optical thermoplastic material 60 has a glass transition temperature $Tg_{Wafer}$ lower than the glass transition temperature $Tg_{Lens}$ of the first optical thermoplastic material 52, the shape integrity of the microstructures 58 is preserved.

Considering the desired final thickness of the resulting optical article to obtain, the thickness of the covering layer 62 is comprised between 0.25mm and 2mm, and preferably between 0.40mm and 1.50mm.

For practical purposes, the thickness of the optical article with encapsulated microstructures 64 is comprised between 0.50mm to 15mm and above.

The optical article with encapsulated microstructures 64 can be a lens, either a finished lens or a semi-finished (SF) lens, a wafer or a film.

In an advantageous embodiment of the invention, to improve the bonding between the covering layer 62 and the support layer 56, the support layer 56 is pre-heated (for example in an oven) before being inserted back into the mold 50 in step 106 to overmold the second optical thermoplastic material 60. This is because the bonding of two dissimilar materials (i.e., the first thermoplastic material 52 and the second thermoplasti material 60) during overmolding is predominately a result of polymer chain entanglements due to interdiffusion of molecules at the interface, which can better be obtained when the surface of the support layer 56 is heated to a temperature in the vicinity of (preferably within 5°C) or above its glass transition temperature $Tg_{Lens}$.

In fact, when injecting the covering layer 62, which is a thin layer, over the support layer 56, which is usually cold, the melt is frozen immediately upon contacting the surface of the support layer 56 and the interface remains solid throughout the overmolding process. The resulting bonding strength between the covering layer 62 and the support layer 56 is therefore poor. This is because the covering layer 62 has a significantly smaller mass with respect to the mass of the support layer 56 and therefore it does not contain enough thermal energy during overmolding to heat the contact surface near or above the glass temperature $Tg_{Lens}$ of the support layer 56, to facilitate the interdiffusion of molecules.

Thanks to the pre-heating of the support layer 56, the difference between the temperature of the support layer 56 and its glass temperature $Tg_{Lens}$ is reduced such that the thermal energy of the molten material of the covering layer 62 becomes sufficient to raise the contact surface temperature close to or above the glass temperature $Tg_{Lens}$ of the support layer 56.

Considering the range of the thickness of the covering layer 62, the support layer 56 should be pre-heated to a uniform temperature that satisfies the following relation:

$$0°C < \Delta T = Tg_{Lens} - T_{Lens} \leq 100°C$$

where $T_{Lens}$ is the temperature of the support layer 56, and preferably

$$5°C \leq \Delta T = Tg_{Lens} - T_{Lens} \leq 75°C$$

For example, when overmolding a PMMA covering layer 62 to encapsulate the microstructures 58 on the convex surface of a PC support layer 56 having a $Tg_{Lens}$ of 150°C, the support layer 56 should be pre-heated to a temperature between 50 and 150°C, and preferably between 75 and 145°C, before being inserted into the mold 50 to carry out the injection overmolding of the covering layer 62, in order to achieve a strong bonding.

The bonding strength between the covering layer 62 and the support layer 56 depends not only on the contact temperature at the interface between the two layers but also on the time passed under pressure into the mold 50 in step 110. Hence, step 110 of the injection overmolding process has to be long enough to achieve strong bonding to prevent delamination. For example, step 110 should last between 30 seconds and 10 minutes, and preferably between 1 minute and 8 minutes.

In a further advantageous embodiment of the invention, a special ejection mechanism is applied to retrieve the optical article with encapsulated microstructures 64 at the end of the process, to prevent damages.

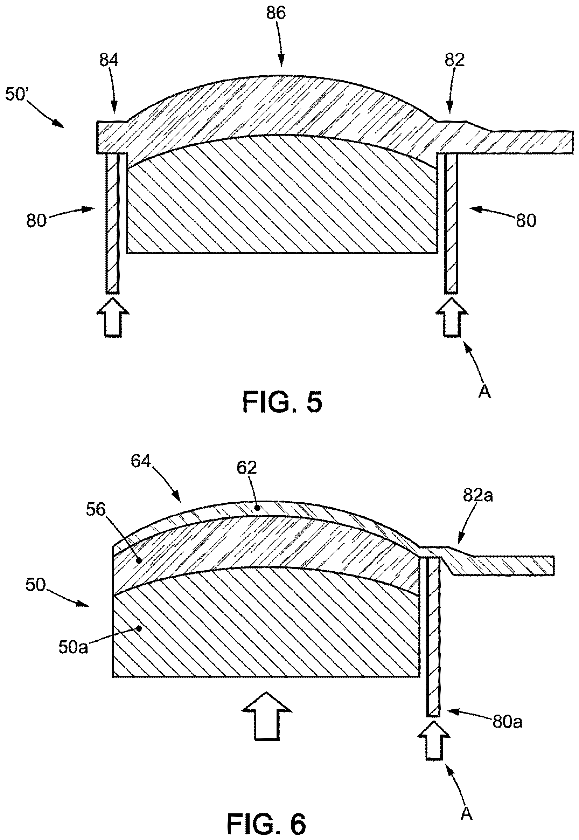

For prior art injection molding processes, optical articles are ejected out of the mold cavity by using ejector pins 80 which push against a respective gate area 82 and a tab area 84 of a prior art optical article 86 in a pushing direction A, as illustrated in Figure 5 which shows a top view of a mold 50' and related prior art [2]optical article 86 of the prior art. The gate area 82 and tab area 84 are designed to be big and strong enough to withstand the ejection force to push the optical article 86 out of the cavity without breaking.

However, in the method for manufacturing an optical article with encapsulated microstructures according to the present invention, the covering layer 62 is thin and fragile, therefore, the use of ejector pins often leads to breakage and delamination of the optical article with encapsulated microstructures 64 in the anchoring areas where the gate area and tab area meet the support layer 56.

Therefore, advantageously, the method according to the present invention further comprises the step of pushing the optical article with encapsulated microstructures 64 out of the mold 50 in the pushing direction A by using at the same time an ejector pin 80a and a body 50a of the mold 50 itself as ejector, as illustrated in Figure 6 which shows a top view of the mold 50 with the optical article with encapsulated microstructures 64.

The synchronized movements of the body 50a and the ejector pin 80a at the gate area 82a prevent any damages to the covering layer 62 during the ejection phase.

Lastly, as shown in Figure 6, the bottom edge of the gate area 82a is preferably aligned with or slightly above the top edge of the support layer 56, to prevent the melt from wrapping around the side wall of the optical article 64 causing ejection difficulty.

In an example according to the present invention, encapsulation of unifocal microlenses 58 on a polycarbonate (PC) support layer 56 with a polymethyl methacrylate (PMMA) covering layer 62 to form a PMMA/PC lens 64 (the optical article with encapsulated microstructures) has been realized.

A PC support layer 56 having a diameter of 76mm and a center thickness of 9mm with unifocal microlenses 58 on the convex surface has been produced in a first step, in a known manner, with a Nissei ES4000 injection molding machine using a Mitsubishi Engineering-Plastics (MEP) lupilon™ PC resin having a refractive index of 1.586 and a glass transition temperature $Tg$ of about 145°C. The injection molding parameters have been set to the followings: melt temperature 515°F, mold temperature 270°F, injection speed 8% and packing pressure 46%.

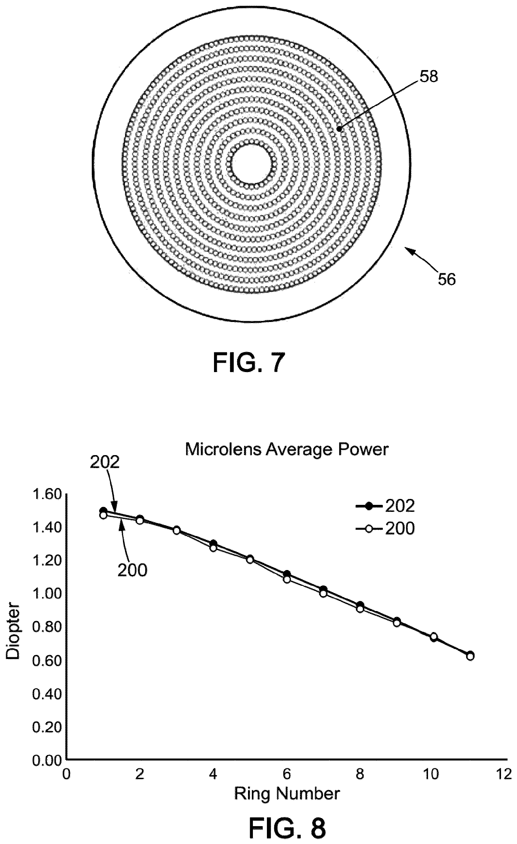

The unifocal microlenses 58 have been arranged in a concentric-ring configuration as shown in Figure 7, which is a top view picture of the PC support layer 56.

In a second step, encapsulation of the microlenses 58 obtained in the first step has been performed, in a known manner, with a Nissei FN4000 injection molding machine using Roehm America ACRYLITEO hw55 PMMA copolymer having a refractive index of 1.510 and a glass transition temperature $Tg$ of 120°C, thus obtaining a PMMA/PC lens 64, in particular a semi-finished (SF) lens.

The PC support layer 56 has been pre-heated in an oven at 120°C for at least one hour before being inserted into the mold 50 for overmolding the PMMA covering layer 62. The melt and mold temperatures for the injection overmolding process have been set at 480°F and 245°F, respectively. The injection speed was 45%, the packing pressure was 48% and the time of step 110 was 5 minutes. The thickness of the PMMA covering layer 62 was 1.1mm.

The resulting PMMA/PC lens 64 (the optical article with encapsulated microstructures) has been ejected using an insert-eject mechanism as above disclosed with reference to Figure 6.

The microstructures 58 have been characterized using a known imaging device and Figure 8 shows how the actual microlens average power 200 for each ring matches very well a design target 202, suggesting that the microlens shape integrity has been preserved.

The PMM/PC lens 64 has been later surfaced and edged to a plano lens having a diameter of 70mm and a center thickness of 2mm without any delamination, this indicating a very strong bonding between the PMMA covering layer 62 and the PC support layer 56.

In a further example according to the present invention, a PC support layer 56 having a diameter of 76mm and a center thickness of 9mm and having unifocal microlenses 58 on the convex surface has been produced with a Nissei ES4000 injection molding machine using a Mitsubishi Engineering-Plastics (MEP) lupilon™ PC resin having a refractive index of 1.586 and a glass transition temperature $Tg$ of about 145°C. The injection molding parameters have been set to the followings: melt temperature 515°F, mold temperature 270°F, injection speed 8% and packing pressure 46%.

The unifocal microlenses 58 have been arranged in a concentric-ring configuration as shown in Figure 7 above.

In a second step, an injection overmolding of a PMMA covering layer 62 on the convex surface of the PC support layer 56 of the first step has been carried out as described here above, with the difference that the PC support layer 56 lens has not been pre-heated, and it was at a 23°C room temperature.

The resulting PMMA/PC lens 64 delaminated correctly following the step disclosed with reference to Figure 6.

In a further example according to the present invention, a PC support layer 56 with bifocal microlenses 58 on the convex surface and having a diameter of 76mm and a center thickness of 9mm has been produced with a Nissei ES4000 injection molding machine using a Mitsubishi Engineering-Plastics (MEP) lupilon™ PC resin having a refractive index of 1.586 and a glass transition temperature *Tg* of about 145°C. The injection molding parameters have been set to the followings: melt temperature 515°F, mold temperature 270°F, injection speed 8% and packing pressure 46%.

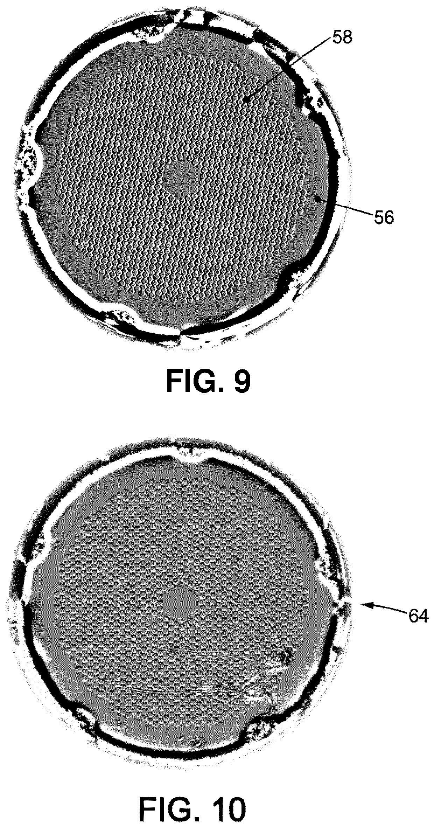

The bifocal microlenses 58 have been arranged in a contiguous configuration as shown in Figure 9, which is a bottom view picture of the support layer 56.

In a second step, encapsulation of the bifocal microlenses 58 obtained in the first step has been performed, in a known manner, with a Nissei FN4000 injection molding machine using Roehm America ACRYLITEO hw55 PMMA copolymer having a refractive index of 1.510 and a glass transition temperature *Tg* of 120°C, thus obtaining a PMMA/PC lens 64.

The PC support layer 56 has been pre-heated in an oven at 120°C for at least one hour before being inserted into the mold 50 for overmolding the PMMA covering layer 62. The melt and mold temperatures for the injection overmolding process have been set at 480°F and 245°F, respectively. The injection speed was 45%, the packing pressure was 48% and the time of step 110 was 5 minutes. The thickness of the PMMA covering layer 62 was 1.1mm.

The resulting PMMA/PC lens 64 has been ejected using an insert-eject mechanism as above disclosed with reference to Figure 6.

The encapsulated microlenses 58 have been characterized using a known imaging device and Figure 10 shows an image of the PMMA/PC lens 64, which shows a very well-defined boundaries between the microlenses 58, thus indicating that the microlens shape integrity has been preserved.

Finally, the PMMA/PC lens 64 has been treated through Rx surfacing/edging processes without resulting in layer separation, which is an indication of a strong bonding between the PMMA and the PC.

Some of the advantages of present invention include:

- a high index composite optical article with encapsulated microstructures 64, in particular for myopia control is obtained;
- the solution is applicable for the encapsulation of a variety of microstructures including unifocal and bifocal microlenses, pi-Fresnel microstructures, and diffractive micro pillars, etc. in different arrangements such as concentric rings or a contiguous hexagonal array; and
- the method could be compatible with existing processes for producing photochromic lenses as the microstructures 58 are encapsulated and the outer surfaces of the optical article 64 are smooth.

Clearly, the principle of the invention remaining the same, the embodiments and details of production can be varied considerably from what has been described and illustrated purely by way of non-limiting example, without departing from the scope of protection of the present as defined in the attached claims.

**Claims**

1. Method for manufacturing an optical article with encapsulated microstructures (64) comprising the steps of:

    - providing a support layer (56) having microstructures (58) on a front convex surface, the support layer (56) comprising a first optical thermoplastic material (52);
    - depositing, on said micro-structured surface, a second optical thermoplastic material (60) having a refractive index ($RI_{Wafer}$) and a glass transition temperature ($Tg_{Wafer}$) lower than a respective refractive index ($RI_{Lens}$) and glass transition temperature ($Tg_{Lens}$) of the first optical thermoplastic material (52), thus obtaining a covering layer (62) which encapsulates the microstructures (58), the support layer (56) being thicker than the covering layer and forming, together with said covering layer (62), said optical article with encapsulated microstructures (64).

2. The method of claim 1, wherein depositing a second optical thermoplastic material (60) comprises performing an injection overmolding.

3. The method of claims 1 or 2, further comprising preheating the support layer (56) before depositing the second optical thermoplastic material (60).

4. The method of claim 3, wherein the support layer (56) is pre-heated to a uniform temperature that satisfies the following relation:

$$0°C < \Delta T = Tg_{Lens} - T_{Lens} \leq 100°C$$

where $T_{Lens}$ is the temperature of the support layer (56) and $Tg_{Lens}$ is the glass transition temperature of the first optical thermoplastic material (52).

5. The method of any of the preceding claims, further comprising placing the support layer (56) into a mold (50) before depositing the second optical thermoplastic material (60) and then pushing the optical article with encapsulated microstructures (64) out of the mold (50) in a pushing direction (A) by using at the same time an ejector pin (80a) and a body (50a) of the mold (50) itself as ejector.

6. The method of any of the above claims, wherein the first optical material (52) is polycarbonate, aromatic thermoplastic polyurethane, aromatic polyamide, polysulfone, polyphenylsulfone, polyetherimide, a copolymer thereof, or a derivative or mixture thereof.

7. The method of any of the above claims, wherein the second optical material (60) is polymethyl methacrylate, methyl methacrylate copolymer, aliphatic thermoplastic polyurethane, aliphatic polyamide, isosorbide copolycarbonate, polyester, a copolymer thereof, or a derivative or mixture thereof.

8. The method of any of the above claims, wherein the thickness of the support layer (56) is comprised between 0.25mm to 15mm and above.

9. The method of any of the above claims, wherein the thickness of the covering layer (62) is comprised between 0.25mm and 2mm, and preferably between 0.40mm and 1.50mm.

10. The method of any of the above claims, wherein the thickness of the optical article with encapsulated microstructures (64) is comprised between 0.50mm to 15mm and above

11. An optical article with encapsulated microstructures manufactured according to a method for manufacturing an optical article with encapsulated microstructures according to any of the claims 1 to 10.

12. The optical article with encapsulated microstructures of claim 11, wherein the optical article with encapsulated microstructures comprises at least one of a finished lens, a semi-finished lens, a wafer or a film.

13. The optical article with encapsulated microstructures claim 12, designed for controlling myopia of an individual.

**Amended claims in accordance with Rule 137(2) EPC.**

1. Method for manufacturing an optical article with encapsulated microstructures (64) comprising the steps of:

   - providing a support layer (56) having microstructures (58) on a front convex surface, the support layer (56) comprising a first optical thermoplastic material (52);
   - depositing, on said micro-structured surface, a second optical thermoplastic material (60) having a refractive index ($RI_{Wafer}$) and a glass transition temperature ($Tg_{Water}$) lower than a respective refractive index ($RI_{Lens}$) and glass transition temperature ($Tg_{Lens}$) of the first optical thermoplastic material (52), thus obtaining a covering layer (62) which encapsulates the microstructures (58), the support layer (56) being thicker than the covering layer and forming, together with said covering layer (62), said optical article with encapsulated microstructures (64);

the method being **characterized in that** it further comprises pre-heating the support layer (56) before depositing the second optical thermoplastic material (60) to a uniform temperature that satisfies the following relation:

$$0°C < \Delta T = Tg_{Lens} - T_{Lens} \leq 100°C$$

where $T_{Lens}$ is the temperature of the support layer (56) and $Tg_{Lens}$ is the glass transition temperature of the first optical thermoplastic material (52).

2. The method of claim 1, wherein depositing a second optical thermoplastic material (60) comprises performing an injection overmolding.

3. The method of any of the above claims, wherein the first optical material (52) is polycarbonate, aromatic thermoplastic polyurethane, aromatic polyamide, polysulfone, polyphenylsulfone, polyetherimide, a copolymer thereof, or a derivative or mixture thereof.

4. The method of any of the above claims, wherein the second optical material (60) is polymethyl methacrylate, methyl methacrylate copolymer, aliphatic thermoplastic polyurethane, aliphatic polyamide, isosorbide copolycarbonate, polyester, a copolymer thereof, or a derivative or mixture thereof.

5. The method of any of the above claims, wherein the thickness of the support layer (56) is comprised between 0.25mm to 15mm and above.

6. The method of any of the above claims, wherein the thickness of the covering layer (62) is comprised between 0.25mm and 2mm, and preferably between 0.40mm and 1.50mm.

7. The method of any of the above claims, wherein the thickness of the optical article with encapsulated microstructures (64) is comprised between 0.50mm to 15mm and above

8. An optical article with encapsulated microstructures manufactured according to a method for manufacturing an optical article with encapsulated microstructures according to any of the claims 1 to 7.

9. The optical article with encapsulated microstructures of claim 8, wherein the optical article with encapsulated microstructures comprises at least one of a finished lens, a semi-finished lens, a wafer or a film.

10. The optical article with encapsulated microstructures of claim 9, designed for controlling myopia of an individual.

FIG. 1

FIG. 2

FIG. 3

FIG. 4

FIG. 5

FIG. 6

**FIG. 7**

**FIG. 8**

FIG. 9

FIG. 10

# EP 4 640 417 A1

**EUROPEAN SEARCH REPORT**

Application Number

EP 24 30 5654

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 197 765 A1 (ESSILOR INT [FR]) 21 June 2023 (2023-06-21) | 1-3,6-13 | INV. B29D11/00 |
| Y | * abstract * | 5 | |
| A | * figures 1A-11 * * paragraphs [0030] - [0041] * | 4 | |
| | ----- | | |
| X | EP 4 194 932 A1 (ESSILOR INT [FR]) 14 June 2023 (2023-06-14) | 1-3,6-13 | |
| A | * abstract * * figures 1-8 * * paragraphs [0022] - [0029], [0077] - [0079] * | 4,5 | |
| | ----- | | |
| Y | KR 101 156 701 B1 (N2A CO LTD [KR]) 14 June 2012 (2012-06-14) | 5 | |
| A | * abstract * * figures 1-7 * | 1-4,6-13 | |
| | ----- | | |
| A | US 2014/346691 A1 (OTSUKA YOSHITAKA [JP]) 27 November 2014 (2014-11-27) * abstract * * figures 1-8 * | 1-13 | |
| | ----- | | TECHNICAL FIELDS SEARCHED (IPC) |
| A | US 2021/354410 A1 (GUILLOT MATTHIEU [FR] ET AL) 18 November 2021 (2021-11-18) * abstract * * figures 1A-11 * | 1-13 | B29D G02C B29C B29L |
| | ----- | | |
| A | US 2023/146460 A1 (JIANG PEIQI [US] ET AL) 11 May 2023 (2023-05-11) * abstract * * figures 1a-3e * | 1-13 | |
| | ----- | | |

The present search report has been drawn up for all claims

| Place of search | Date of completion of the search | Examiner |
|---|---|---|
| The Hague | 7 November 2024 | Heckmann, Paul |

EPO FORM 1503 03.82 (P04C01)

Europäisches
Patentamt

European
Patent Office

Office européen
des brevets

**Application Number**

EP 24 30 5654

---

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

Application Number

EP 24 30 5654

The Search Division considers that the present European patent application does not comply with the requirements of unity of invention and relates to several inventions or groups of inventions, namely:

```
1. claims: 1-4, 6-13

   Method for manufacturing an optical article wherein the
   support layer is pre-heated to a uniform temperature that
   satisfies the following relation: 0°C< ?T = TgLens-TLens ?
   100°C where TLens is the temperature of the support layer
   and TgLens is the glass transition temperature of the first
   optical thermoplastic material.
                             ---


2. claim: 5

   Method for manufacturing an optical article with
   encapsulated microstructures comprising placing the support
   layer into a mold before depositing the second optical
   thermoplastic material and then pushing the optical article
   with encapsulated microstructures out of the mold in a
   pushing direction by using at the same time an ejector pin
   and a body of the mold itself as ejector.
                             ---
```

## ANNEX TO THE EUROPEAN SEARCH REPORT
## ON EUROPEAN PATENT APPLICATION NO.

EP 24 30 5654

This annex lists the patent family members relating to the patent documents cited in the above-mentioned European search report.
The members are as contained in the European Patent Office EDP file on
The European Patent Office is in no way liable for these particulars which are merely given for the purpose of information.

07-11-2024

| Patent document cited in search report | | Publication date | Patent family member(s) | | Publication date |
|---|---|---|---|---|---|
| EP 4197765 | A1 | 21-06-2023 | CN | 118159411 A | 07-06-2024 |
| | | | EP | 4197765 A1 | 21-06-2023 |
| | | | WO | 2023110912 A1 | 22-06-2023 |
| EP 4194932 | A1 | 14-06-2023 | CN | 118251626 A | 25-06-2024 |
| | | | EP | 4194932 A1 | 14-06-2023 |
| | | | WO | 2023104982 A1 | 15-06-2023 |
| KR 101156701 | B1 | 14-06-2012 | NONE | | |
| US 2014346691 | A1 | 27-11-2014 | CN | 104105583 A | 15-10-2014 |
| | | | JP | 6150799 B2 | 21-06-2017 |
| | | | JP | WO2014010560 A1 | 23-06-2016 |
| | | | US | 2014346691 A1 | 27-11-2014 |
| | | | WO | 2014010560 A1 | 16-01-2014 |
| US 2021354410 | A1 | 18-11-2021 | BR | 112021007076 A2 | 20-07-2021 |
| | | | CN | 112912789 A | 04-06-2021 |
| | | | CN | 117452668 A | 26-01-2024 |
| | | | CN | 117518314 A | 06-02-2024 |
| | | | EP | 3640714 A1 | 22-04-2020 |
| | | | US | 2021354410 A1 | 18-11-2021 |
| | | | US | 2023072785 A1 | 09-03-2023 |
| | | | US | 2023391028 A1 | 07-12-2023 |
| | | | WO | 2020078691 A1 | 23-04-2020 |
| US 2023146460 | A1 | 11-05-2023 | CN | 115398279 A | 25-11-2022 |
| | | | EP | 3896499 A1 | 20-10-2021 |
| | | | HU | E065095 T2 | 28-05-2024 |
| | | | PL | 3896499 T3 | 22-04-2024 |
| | | | PT | 3896499 T | 23-01-2024 |
| | | | US | 2023146460 A1 | 11-05-2023 |
| | | | WO | 2021209556 A1 | 21-10-2021 |

EPO FORM P0459

For more details about this annex : see Official Journal of the European Patent Office, No. 12/82